# EUROPÄISCHE PATENTSCHRIFT

(11) **EP 3 545 507 B1**
(45) Veröffentlichungstag und Bekanntmachung des Hinweises auf die Patenterteilung: **07.12.2022**
(21) Anmeldenummer: 17781104.9
(22) Anmeldetag: 09.10.2017
(51) Int. Cl.: G08G 1/04, G08G 1/0967, G05D 1/02, B62D 15/02, G06V 20/58

(54) **VERFAHREN UND SYSTEM ZUM DETEKTIEREN EINES SICH INNERHALB EINES PARKPLATZES BEFINDENDEN ERHABENEN OBJEKTS**
METHOD AND SYSTEM FOR THE DETECTION OF A RAISED OBJECT LOCATED WITHIN A PARKING AREA
PROCÉDÉ ET SYSTÈME DE DÉTECTION D'UN OBJET SAILLANT SE TROUVANT À L'INTÉRIEUR D'UN PARC DE STATIONNEMENT

(30) Priorität: 23.11.2016 DE 102016223171
(43) Veröffentlichungstag der Anmeldung: 02.10.2019
(73) Patentinhaber: Robert Bosch GmbH, 70442 Stuttgart (DE)
(72) Erfinder: NORDBRUCH, Stefan, 70806 Kornwestheim (DE); HESS, Felix, 71642 Ludwigsburg (DE); LEHN, Andreas, 71642 Ludwigsburg (DE)
(86) Internationale Anmeldenummer: PCT/EP2017/075634
(87) Internationale Veröffentlichungsnummer: WO 2018/095641

(56) Entgegenhaltungen:
- EP-A1- 2 922 042
- CN-U- 205 354 377
- US-A1- 2014 244 366

## Beschreibung

Die Erfindung betrifft ein Verfahren zum Detektieren eines sich innerhalb eines Parkplatzes, beispielsweise eines Parkhauses, insbesondere innerhalb eines Fahrschlauchs eines Parkplatzes, befindenden erhabenen Objekts. Die Erfindung betrifft ferner ein System zum Detektieren eines sich innerhalb eines Parkplatzes, beispielsweise Parkhauses, insbesondere innerhalb eines Fahrschlauchs eines Parkplatzes, befindenden erhabenen Objekts. Die Erfindung betrifft des Weiteren einen Parkplatz. Die Erfindung betrifft ferner ein Computerprogramm.

### Stand der Technik

Die Offenlegungsschrift EP 2 922 042 A1 beschreibt ein System zum Detektieren eines Belegungszustandes eines Stellplatzes.

Die Offenlegungsschrift US 2014/244366 A1 offenbart ein System zum Verfolgen von Kraftfahrzeugen.

Die Gebrauchsmusterschrift CN 205 354 377 U offenbart ein System zum Überwachen einer Parkposition.

Die Offenlegungsschrift DE 10 2015 201 209 A1 zeigt ein Valet-Parking System zum automatischen Verbringen eines Fahrzeugs von einer Übergabezone zu einem zugewiesenen Stellplatz innerhalb eines vorgegebenen Parkraums. Das bekannte System umfasst ein Parkplatzüberwachungssystem mit mindestens einer ortsfest angeordneten Sensoreinheit. Das Parkplatzüberwachungssystem ist ausgebildet, die innerhalb des vorgegebenen Parkraums fahrenden Fahrzeuge zu lokalisieren.

### Offenbarung der Erfindung

Die der Erfindung zugrunde liegende Aufgabe ist darin zu sehen, ein Konzept zum effizienten Detektieren eines sich innerhalb eines Parkplatzes, beispielsweise eines Parkhauses, insbesondere innerhalb eines Fahrschlauchs eines Parkplatzes, befindenden erhabenen Objekts bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Detektieren eines sich innerhalb eines Parkplatzes befindenden erhabenen Objekts unter Verwendung von mindestens zwei innerhalb des Parkplatzes räumlich verteilt angeordneten Videokameras bereitgestellt, deren jeweiliger Sichtbereich sich in einem Überlappungsbereich überlappt, umfassend die folgenden Schritte:
- Aufnehmen von jeweiligen Videobildern des Überlappungsbereichs mittels der Videokameras,
- Analysieren der aufgenommenen Videobilder, um in den aufgenommenen Videobildern ein erhabenes Objekt zu detektieren,
- wobei das Analysieren sowohl mittels zumindest einer der Videokameras videokameraintern als auch mittels zumindest einer Recheneinheit, die verschieden von den Videokameras ist, videokameraextern durchgeführt wird,
wobei die Videokameras respektive die Recheneinheit untereinander kommunizieren, um die jeweils aufgenommenen Videobilder zu derjenigen oder denjenigen Videokameras respektive zur Recheneinheit zu senden, mittels welcher oder mittels welchen die videokamerainterne respektive videokameraexterne Analyse durchgeführt wird.

Nach einem anderen Aspekt wird ein System zum Detektieren eines sich innerhalb eines Parkplatzes befindenden erhabenen Objekts bereitgestellt, wobei das System ausgebildet ist, das Verfahren zum Detektieren eines sich innerhalb eines Parkplatzes befindenden erhabenen Objekts durchzuführen.

Nach einem anderen Aspekt wird ein Parkplatz bereitgestellt, welcher das System zum Detektieren eines sich innerhalb eines Parkplatzes befindenden erhabenen Objekts umfasst.

Nach noch einem Aspekt wird ein Computerprogramm bereitgestellt, welches Programmcode zur Durchführung des Verfahrens zum Detektieren eines sich innerhalb eines Parkplatzes befindenden erhabenen Objekts umfasst, wenn das Computerprogramm auf einem Computer, insbesondere auf einem Prozessor einer Videokamera und auf einem Prozessor einer Recheneinheit, ausgeführt wird.

Die Erfindung basiert auf der Erkenntnis, dass die Analyse der aufgenommenen Videobilder sowohl videokameraintern, also auf einer oder auf mehreren der Videokameras selbst, als auch videokameraextern, also auf der Recheneinheit durchgeführt wird. Die Recheneinheit ist also als ein von den Videokameras separates Element ausgebildet. Die Recheneinheit ist also nicht in einer der Videokameras integriert. Die Recheneinheit ist also separat, also extern, von den Videokameras vorgesehen oder ausgebildet. Die Recheneinheit und die Videokameras sind also körperlich unterschiedliche Gegenstände.

Dadurch wird insbesondere der technische Vorteil bewirkt, dass die Videokameras effizient genutzt werden können: Aufnehmen der Videobilder und Analysieren der Videobilder. Die Videokameras weisen also eine Doppelfunktion auf.

Insbesondere wird durch die Verwendung von mindestens zwei Videokameras eine Redundanz bewirkt. Insbesondere können Fehler eine Videokamera durch die andere Videokamera kompensiert werden.

Dadurch wird ferner insbesondere der technische Vorteil bewirkt, dass eine Erhöhung der Sicherheit durch redundante Berechnungen (auf der Videokamera und auf der Recheneinheit) bewirkt ist.

Die einzelnen Ergebnisse der jeweiligen Analysen werden beispielsweise miteinander verglichen, um Fehler festzustellen. Das heißt also beispielsweise, dass ein Ergebnis der Analyse der Videokamera beispielsweise durch ein Ergebnis der Analyse der Recheneinheit verifiziert wird.

Die Analyse der Videobilder umfasst also eine videokamerainterne Analyse der Videobilder mittels einer oder mittels mehreren Videokameras und eine videokameraexterne Analyse der Videobilder mittels einer oder mittels mehreren Recheneinheiten.

Somit wird also der technische Vorteil bewirkt, dass ein Konzept zum effizienten Detektieren eines sich innerhalb eines Parkplatzes befindenden erhabenen Objekts bereitgestellt werden kann.

Dadurch wird zum Beispiel der technische Vorteil bewirkt, dass Fehlalarme reduziert oder vermieden werden können, was in vorteilhafter Weise einen effizienten Betrieb des Parkplatzes ermöglicht und was beispielsweise einen effizienten Betrieb von innerhalb des Parkplatzes führerlos fahrenden Kraftfahrzeugen ermöglicht.

Dadurch wird zum Beispiel der technische Vorteil bewirkt, dass Objekte effizient erkannt werden können, so dass ein Kollidieren mit solchen Objekten verhindert werden kann.

Die Formulierung "zumindest einer der Videokameras" umfasst insbesondere folgende Formulierungen: "ausschließlich eine der Videokameras", "genau eine der Videokameras", "mehrere Videokameras" und "alle Videokameras". Das heißt also insbesondere, dass die Analyse auf einer, insbesondere ausschließlich einer, oder auf mehreren Videokameras durchgeführt wird. Die Analyse wird also mittels einer oder mittels mehreren Videokameras durchgeführt.

Zum Durchführen der Analyse weist die entsprechende Videokamera beispielsweise einen Prozessor auf, der ausgebildet ist, die aufgenommenen Videobilder zu analysieren, um in den aufgenommenen Videobildern ein erhabenes Objekt zu detektieren.

Auf dem Prozessor der Videokamera läuft beispielsweise ein Videobildverarbeitungsprogramm ab.

Der Prozessor der Videokamera ist beispielsweise ausgebildet, ein Videobildverarbeitungsprogramm auszuführen.

Die Formulierung "zumindest einer Recheneinheit" umfasst insbesondere folgende Formulierungen: "ausschließlich eine Recheneinheit", "genau eine Recheneinheit", "mehrere Recheneinheiten". Das heißt also insbesondere, dass die Analyse auf einer, insbesondere ausschließlich einer, oder auf mehreren Recheneinheiten durchgeführt wird. Die Analyse wird also mittels einer oder mittels mehreren Recheneinheiten durchgeführt.

Zum Durchführen der Analyse weist die Recheneinheit beispielsweise einen Prozessor auf, der ausgebildet ist, die aufgenommenen Videobilder zu analysieren, um in den aufgenommenen Videobildern ein erhabenes Objekt zu detektieren.

Auf dem Prozessor der Recheneinheit läuft beispielsweise ein Videobildverarbeitungsprogramm ab.

Der Prozessor der Recheneinheit ist beispielsweise ausgebildet, ein Videobildverarbeitungsprogramm auszuführen.

Die Recheneinheit ist nach einer Ausführungsform Teil einer Cloud-Infrastruktur.

Die Recheneinheit ist nach einer Ausführungsform als eine Datenverarbeitungseinrichtung ausgebildet.

Ein Parkplatz im Sinne der Beschreibung ist insbesondere ein Parkplatz für Kraftfahrzeuge. Der Parkplatz ist beispielsweise ein Parkhaus oder eine Parkgarage. Ein zu detektierendes Objekt befindet sich beispielsweise innerhalb eines Fahrschlauchs des Parkplatzes.

Ein erhabenes Objekt bezeichnet insbesondere ein Objekt, dessen Höhe relativ zu einem Boden des Parkplatzes mindestens 10 cm beträgt.

Das erhabene Objekt befindet sich beispielsweise auf einem Boden des Parkplatzes, beispielsweise auf einer Fahrbahn oder innerhalb eines Fahrbereichs, also beispielsweise innerhalb eines Fahrschlauchs, des Parkplatzes. Das erhabene Objekt befindet sich also beispielsweise innerhalb eines Fahrschlauchs des Parkplatzes.

Gemäß einer Ausführungsform ist vorgesehen, dass zum Detektieren eines erhabenen Objekts in den aufgenommenen Videobildern gemäß der Analyse folgende Schritte vorgesehen sind:
- Rektifizieren der aufgenommenen Videobilder,
- miteinander Vergleichen der jeweiligen rektifizierten Videobilder, um einen Unterschied in den aufgenommenen Überlappungsbereichen zu erkennen,
- Detektieren eines erhabenen Objekts basierend auf dem Vergleich.

Vor einem Vergleich der Videobilder ist also insbesondere vorgesehen, dass die Videobilder in ein bestimmtes, gemeinsames Koordinatensystem, z.B. in eine Vogelperspektive transformiert werden, also rektifiziert werden. Die rektifizierten Videobilder werden dann miteinander verglichen.

Wenn alle rektifizierten Videobilder des Überlappungsbereichs keine Unterschiede aufweisen, also gleich oder identisch sind, oder Unterschiede aufweisen, die einen vorbestimmten Toleranzwert nicht überschreiten, so kann davon ausgegangen werden, dass sich kein erhabenes Objekt auf der jeweiligen Sichtachse zwischen dem Überlappungsbereich und den Videokameras befindet. Sofern sich aber ein erhabenes Objekt auf einer Sichtachse zwischen dem Überlappungsbereich und einer der Videokameras befindet, sieht diese eine Videokamera nicht das Gleiche wie die anderen Videokameras. Das entsprechende rektifizierte Videobild wird sich also von dem rektifizierten Videobild der anderen Videokameras um einen Unterschied größer als der vorbestimmte Toleranzwert unterscheiden. Somit kann also effizient ein erhabenes Objekt detektiert werden.

Ein Rektifizieren der aufgenommenen Videobilder umfasst insbesondere respektive ist beispielsweise eine Transformation der aufgenommenen Videobilder in die Vogelperspektive. Das heißt also insbesondere, dass die aufgenommenen Videobilder beispielsweise in die Vogelperspektive transformiert werden. Dadurch kann in vorteilhafter Weise der anschließende Vergleich besonders effizient durchgeführt werden.

Die Formulierungen "Gleiche Bildinformation" respektive "identische Bildinformation" respektive "gleiche Videobilder" respektive "identische Videobilder" im Sinne dieser Beschreibung umfassen insbesondere auch den Fall, dass sich die Bildinformationen respektive die Videobilder um maximal einen vorbestimmten Toleranzwert unterscheiden. Erst Unterschiede, die größer als der vorbestimmte Toleranzwert ist, resultieren in einer Detektion eines Objekts. Das heißt also insbesondere, dass geringe Unterschiede in der Helligkeits- und/oder Farbinformation zulässig sind, um die Aussage zu treffen, dass die Bildinformation respektive die Videobilder gleich respektive identisch ist oder sind, solange die Unterschiede kleiner als der vorbestimmte Toleranzwert sind.

Das heißt also insbesondere, dass beispielsweise erst dann ein erhabenes Objekt detektiert wird, wenn sich beispielsweise die Videobilder um einen Unterschied unterscheiden, der größer ist als der vorbestimmte Toleranzwert. Das heißt also insbesondere, dass erst dann ein erhabenes Objekt detektiert wird, wenn sich beispielsweise ein Überlappungsbereich von den anderen Überlappungsbereichen um einen Unterschied unterscheidet, der größer als der vorbestimmte Toleranzwert ist.

Gemäß einer Ausführungsform ist vorgesehen, dass die zumindest eine der Videokameras (203) und die Recheneinheit unabhängig voneinander die aufgenommenen Videobilder analysieren.

Dadurch wird zum Beispiel der technische Vorteil bewirkt, dass effizient eine Redundanz geschaffen ist. Sowohl die Videokamera als auch die Recheneinheit werden also insbesondere ein eigenes Ergebnis der Analyse bereitstellen. Die jeweiligen Ergebnisse werden beispielsweise miteinander verglichen, beispielsweise mittels der Recheneinheit respektive mittels der Videokamera.

Wenn der Vergleich einen Unterschied ergibt, so ist beispielsweise ein Wiederholen der Analyse vorgesehen.

Ein Ergebnis der Analyse im Sinne der Beschreibung gibt insbesondere an, ob in den aufgenommenen Videobildern ein erhabenes Objekt detektiert wurde oder nicht.

Gemäß einer anderen Ausführungsform ist vorgesehen, dass bei mehr als zwei verwendeten Videokameras die Recheneinheit jeweilige Videobilder von mehr Videokameras analysiert als die zumindest eine der Videokameras.

Dadurch wird insbesondere der technische Vorteil bewirkt, dass die Analyse effizient durchgeführt werden kann. Da die Recheneinheit insbesondere mehr Rechenkapazität respektive einen schnelleren Prozessor aufweist als die Videokameras, kann die Recheneinheit auch mehr Videobilder in der gleichen Zeit analysieren wie die Videokamera. Somit können beispielsweise in der gleichen Zeit zwei Ergebnisse bereitgestellt werden. Anderenfalls müsste gegebenenfalls auf das Ergebnis der Videokamera gewartet werden, was Zeit kostet.

Das heißt also beispielsweise, dass bei x verwendeten Videokameras die Videokamera Videobilder von y Videokameras analysiert, wohingegen die Recheneinheit Videobilder von z Videokameras analysiert, wobei y kleiner als z ist und wobei z kleiner oder kleiner-gleich x ist.

In einer Ausführungsform ist vorgesehen, dass ein Ergebnis der Analyse der zumindest einen der Videokameras mit einem Ergebnis der Analyse der Recheneinheit mittels der Recheneinheit überprüft wird.

Dadurch wird zum Beispiel der technische Vorteil bewirkt, dass eine fehlerhaft arbeitende Videokamera effizient detektiert werden kann. Es wird hier davon ausgegangen, dass die Recheneinheit zuverlässiger funktioniert. Denn in der Regel ist die Recheneinheit in einem geschützten Raum angeordnet, der die Recheneinheit vor schädlichen Einflüssen schützt.

Hingegen sind Videokameras eines Parkplatzes beispielsweise Witterungseinflüssen oder mutwilligen Gewalteinwirkungen von Personen ausgesetzt, was beispielsweise ihre Funktionsfähigkeit negativ beeinflussen kann.

Wenn das Überprüfen ergibt, dass die jeweiligen Ergebnisse gleich sind, so wird davon ausgegangen, dass die Videokamera korrekt arbeitet. Anderenfalls wird davon ausgegangen, dass die Videokamera fehlerhaft arbeitet.

Das heißt also, dass gemäß einer Ausführungsform die Recheneinheit ein Ergebnis der Analyse der Videokameras validiert. Das heißt also beispielsweise, dass zwei oder mehr Videokameras die Analyse durchführen, wobei die Recheneinheit diese Analyse validiert.

Nach einer Ausführungsform ist vorgesehen, dass, wenn mittels der Recheneinheit basierend auf der Überprüfung ein Fehler in dem Ergebnis der Analyse der zumindest einen der Videokameras festgestellt wird, die zumindest eine der Videokameras abgeschaltet wird oder die Videobilder der zumindest einen der Videokameras für eine Analyse für eine Detektion eines erhabenen Objekts ignoriert werden respektive die zumindest eine der Videokameras nicht mehr für eine Durchführung einer Analyse für eine Detektion eines erhabenen Objekts verwendet wird.

Dadurch wird zum Beispiel der technische Vorteil bewirkt, dass eine fehlerhaft arbeitende Videokamera keinen negativen Einfluss mehr für die Detektion eines erhabenen Objekts hat.

In einer Ausführungsform ist vorgesehen, dass, wenn mittels der Recheneinheit basierend auf der Überprüfung ein Fehler in dem Ergebnis der Analyse der zumindest einen der Videokameras festgestellt wird, mittels der Recheneinheit eine andere Videokamera bestimmt wird, die anstelle der zumindest einen der Videokameras verwendet wird.

Dadurch wird zum Beispiel der technische Vorteil bewirkt, dass ein Ausfall der Videokamera effizient kompensiert werden kann.

Gemäß einer Ausführungsform ist vorgesehen, dass, wenn das Analysieren mittels mehrerer Videokameras durchgeführt wird, jede der Videokameras unabhängig voneinander die aufgenommenen Videobilder analysiert.

Selbst wenn eine der Videokameras ausfallen sollte, steht auf den anderen Videokameras in vorteilhafter Weise ein Ergebnis der Analyse zur Verfügung. Das heißt also, dass selbst bei einem Ausfall einer Videokamera immer noch ein erhabenes Objekt detektiert werden kann.

Somit wird in vorteilhafter Weise effizient eine Redundanz geschaffen.

In einer Ausführungsform ist vorgesehen, dass innerhalb des Parkplatzes eine Vielzahl von Videokameras räumlich verteilt angeordnet sind, wobei mindestens zwei Videokameras aus der Vielzahl von Videokameras als die zu verwendenden Videokameras ausgewählt werden, deren jeweiliger Sichtbereich sich in dem Überlappungsbereich überlappt.

Gemäß dieser Ausführungsform ist also vorgesehen, dass innerhalb des Parkplatzes mehr als zwei Videokameras räumlich verteilt angeordnet sind. Insbesondere ist das Wissen vorhanden, welche Videokamera welchen Bereich des Parkplatzes erfasst. Zum Erfassen eines Bereichs des Parkplatzes ist vorgesehen, dass aus den mehreren Videokameras mindestens zwei Videokameras ausgewählt werden, die jeweils einen gemeinsamen Bereich, den Überlappungsbereich, sehen, also erfassen können.

Die ausgewählten Videokameras nehmen Videobilder des Überlappungsbereichs auf, die analysiert werden, um ein erhabenes Objekt zu detektieren.

Durch die Auswahl von mindestens zwei Videokameras, die einen gemeinsamen Bereich, hier der Überlappungsbereich, überwachen, kann insbesondere eine verlässliche und robuste Detektion eines erhabenen Objekts bewirkt werden.

Somit wird zum Beispiel der technische Vorteil bewirkt, dass ein sich innerhalb des Parkplatzes befindendes erhabenes Objekt effizient erkannt werden kann.

Insbesondere wird durch die Verwendung von mindestens zwei Videokameras eine Redundanz bewirkt. Insbesondere können Fehler eine Videokamera durch die andere Videokamera kompensiert werden.

Dadurch wird zum Beispiel der technische Vorteil bewirkt, dass Fehlalarme reduziert oder vermieden werden können, was in vorteilhafter Weise einen effizienten Betrieb des Parkplatzes ermöglicht und was beispielsweise einen effizienten Betrieb von innerhalb des Parkplatzes führerlos fahrenden Kraftfahrzeugen ermöglicht.

Dadurch wird zum Beispiel der technische Vorteil bewirkt, dass Objekte effizient erkannt werden können, so dass ein Kollidieren mit solchen Objekten verhindert werden kann.

In einer Ausführungsform ist vorgesehen, dass das Analysieren der aufgenommenen Videobilder mittels einer oder mehrerer der ausgewählten Videokameras videokameraintern durchgeführt wird. Insbesondere wird mittels sämtlichen ausgewählten Videokameras die Analyse durchgeführt. Insbesondere wird die videokamerainterne Analyse ausschließlich mittels einer oder mittels mehrerer der ausgewählten Videokameras durchgeführt.

Dadurch wird zum Beispiel der technische Vorteil bewirkt, dass die Videobilder nicht zu nicht-ausgewählten Videokameras übermittelt werden müssen.

Gemäß einer weiteren Ausführungsform ist vorgesehen, dass das videokamerainterne Analysieren der aufgenommenen Videobilder mittels einer oder mehrerer der nicht-ausgewählten Videokameras videokameraintern durchgeführt wird. Insbesondere wird mittels sämtlichen nicht-ausgewählten Videokameras die videokamerainterne Analyse durchgeführt. Insbesondere wird die videokamerainterne Analyse ausschließlich mittels einer oder mittels mehrerer der nicht-ausgewählten Videokameras durchgeführt.

Dadurch wird zum Beispiel der technische Vorteil bewirkt, dass die nicht-ausgewählten Videokameras effizient genutzt werden, um ein erhabenes Objekt zu detektieren.

In einer Ausführungsform ist vorgesehen, dass das Analysieren der aufgenommenen Videobilder sowohl mittels einer oder mehrerer der ausgewählten Videokameras videokameraintern durchgeführt wird als auch mittels einer oder mehrerer der nicht-ausgewählten Videokameras videokameraintern durchgeführt wird.

Die Formulierung "mindestens zwei Videokameras" bedeutet nach einer Ausführungsform mindestens drei Videokameras.

Nach einer Ausführungsform ist vorgesehen, dass die Videokameras respektive die Recheneinheit untereinander kabellos und/oder kabelgebunden kommunizieren.

Insbesondere sind die Videokameras respektive die Recheneinheit mittels eines Kommunikationsnetzwerks miteinander kommunikationstechnisch verbunden.

Ein Kommunikationsnetzwerk umfasst beispielsweise ein WLAN- und/oder ein Mobilfunkkommunikationsnetzwerk. Eine kabellose Kommunikation umfasst beispielsweise eine Kommunikation gemäß einer kabellosen Kommunikationstechnologie, beispielsweise WLAN und/oder Mobilfunk.

Ein Kommunikationsnetzwerk umfasst beispielsweise ein Ethernet- und/oder ein Buskommunikationsnetzwerk. Eine kabelgebundene Kommunikation umfasst beispielsweise eine Kommunikation gemäß einer kabelgebundenen Kommunikationstechnologie, beispielsweise Ethernet und/oder Buskommunikationtechnologie.

In einer Ausführungsform ist vorgesehen, dass die Videokameras untereinander kommunizieren, um zu entscheiden, mittels welcher oder mittels welchen der Videokameras das videokamerainterne Analysieren der aufgenommenen Videobilder durchgeführt wird.

Dadurch wird zum Beispiel der technische Vorteil bewirkt, dass für diese Entscheidung keine videokameraexternen Rechenkapazitäten bereitgestellt werden müssen.

In einer alternativen Ausführungsform ist vorgesehen, dass videokameraextern mittels der Recheneinheit vorgegeben wird, mittels welcher oder mittels welchen der Videokameras das videokamerainterne Analysieren der aufgenommenen Videobilder durchgeführt wird.

Dadurch wird zum Beispiel der technische Vorteil bewirkt, dass für diese Entscheidung keine videokamerainternen Rechenkapazitäten bereitgestellt werden müssen.

Die Videokameras respektive die Recheneinheit kommunizieren untereinander, um die jeweils aufgenommenen Videobilder zu derjenigen oder denjenigen Videokameras respektive zur Recheneinheit zu senden, mittels welcher oder mittels welchen die videokamerainterne respektive videokameraexterne Analyse durchgeführt wird. Dadurch wird zum Beispiel der technische Vorteil bewirkt, dass die aufgenommenen Videobilder effizient der oder denjenigen Videokameras respektive der Recheneinheit bereitgestellt werden, mittels welcher oder mittels welchen die Analyse videokamerainterne respektive videokameraexterne durchgeführt wird

In einer Ausführungsform ist vorgesehen, dass ein Ergebnis der Analyse an einen Parkplatzverwaltungsserver des Parkplatzes über ein Kommunikationsnetzwerk gesendet wird.

Dadurch wird zum Beispiel der technische Vorteil bewirkt, dass der Parkplatzverwaltungsserver den Parkplatz effizient basierend auf dem Ergebnis betreiben kann.

Gemäß einer Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein zufälliges Auswählen von einer oder mehreren Videokameras aus den mehr als zwei Videokameras umfasst.

Dadurch wird zum Beispiel der technische Vorteil bewirkt, dass statistische Fehler effizient kompensiert werden können.

Nach einer anderen Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von einer oder mehreren Videokameras aus den mehr als zwei Videokameras umfasst, deren jeweiliger mittlerer Sichtbereich, welcher das Zentrum vom jeweiligen Sichtbereich umfasst, vom Überlappungsbereich umfasst ist.

Dadurch wird zum Beispiel der technische Vorteil bewirkt, dass erreicht wird, dass Abbildungsfehler von Objektiven der Videokameras, die in der Regel bevorzugt im Randbereich der Objektive auftreten, die Analyse der Videobilder nicht verfälschen oder erschweren können.

In einer anderen Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von mehreren Videokameras aus den mehr als zwei Videokameras umfasst, die unmittelbar benachbart zueinander angeordnet sind.

Dadurch wird zum Beispiel der technische Vorteil bewirkt, dass der Überlappungsbereich effizient erfasst werden kann.

Gemäß einer anderen Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von mehreren Videokameras aus den mehr als zwei Videokameras umfasst, die den Überlappungsbereich von jeweils gegenüberliegenden Seiten aufnehmen.

Dadurch wird zum Beispiel der technische Vorteil bewirkt, dass erhabene Objekte aus unterschiedlichen Perspektiven erfasst werden können, so dass diese in der Analyse effizient detektiert werden können.

Nach einer anderen Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von einer oder mehreren Videokameras aus den mehr als zwei Videokameras umfasst, die eine bestimmte Mindestauflösung und/oder eine bestimmte Verarbeitungszeit für die Verarbeitung der aufgenommenen Videobilder aufweisen.

Dadurch wird zum Beispiel der technische Vorteil bewirkt, dass der Überlappungsbereich effizient erfasst werden kann. Dadurch wird zum Beispiel der technische Vorteil bewirkt, dass die Analyse effizient durchgeführt werden kann.

Gemäß einer weiteren Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von einer oder mehreren Videokameras aus den mehr als zwei Videokameras umfasst, die untereinander optimal kalibriert sind.

Dadurch wird zum Beispiel der technische Vorteil bewirkt, dass der Überlappungsbereich effizient erfasst werden kann. Dadurch wird zum Beispiel der technische Vorteil bewirkt, dass die Analyse effizient durchgeführt werden kann.

Nach einer Ausführungsform ist vorgesehen, dass bei mehr als zwei Videokameras, deren jeweiliger Sichtbereich sich in dem Überlappungsbereich überlappt, das Auswählen der mindestens zwei Videokameras aus den mehr als zwei Videokameras ein Auswählen von einer oder mehreren Videokameras aus den mehr als zwei Videokameras umfasst, deren Videobilder in einer vorbestimmten Mindestzeit analysiert werden können.

Dadurch wird zum Beispiel der technische Vorteil bewirkt, dass die Analyse effizient und schnell durchgeführt werden kann.

In einer weiteren Ausführungsform ist vorgesehen, dass bei mehr als zwei Videokameras, deren jeweiliger Sichtbereich sich in dem Überlappungsbereich überlappt, genau zwei Videokameras aus den mehr als zwei Videokameras ausgewählt werden.

Dadurch wird zum Beispiel der technische Vorteil bewirkt, dass der Überlappungsbereich effizient erfasst werden kann. Dadurch wird zum Beispiel der technische Vorteil bewirkt, dass die Analyse effizient und schnell durchgeführt werden kann, insofern nur Videobilder von zwei Videokameras zu analysieren sind im Vergleich zu einer Analyse von Videobildern von mehr als zwei Videokameras.

Gemäß einer Ausführungsform ist vorgesehen, dass bei mehr als zwei Videokameras, deren jeweiliger Sichtbereich sich in dem Überlappungsbereich überlappt, zunächst alle der mehr als zwei Videokameras ausgewählt werden, wobei über die Zeit ermittelt wird, basierend auf wessen Videobilder der zunächst ausgewählten Videokameras eine Analyse der aufgenommenen Videobilder ein korrektes Ergebnis ergeben hat, wobei dann für den einen Überlappungsbereich nur noch Videokameras aus denjenigen Videokameras ausgewählt werden, deren Videobilder Basis für eine Analyse waren, die ein korrektes Ergebnis ergeben hat.

Dadurch wird zum Beispiel der technische Vorteil bewirkt, dass effizient gelernt werden kann, welche der Videokameras sich am besten eignen, um sicher und zuverlässig in einem bestimmten Bereich des Parkplatzes ein erhabenes Objekt zu detektieren.

Gemäß einer Ausführungsform ist vorgesehen, dass bei mehr als zwei Videokameras, deren jeweiliger Sichtbereich sich in dem Überlappungsbereich überlappt, alle der mehr als zwei Videokameras ausgewählt werden.

Dadurch wird zum Beispiel der technische Vorteil bewirkt, dass der Überlappungsbereich effizient und/oder mit hoher Genauigkeit erfasst werden kann. Dadurch wird zum Beispiel der technische Vorteil bewirkt, dass eine hohe Redundanz und damit einhergehend eine Reduzierung, insbesondere eine Minimierung, von Fehlern bewirkt werden können.

In einer anderen Ausführungsform ist vorgesehen, dass, wenn im Rahmen der Analyse ein Zwischenergebnis ermittelt wird, das mit einer vorbestimmten Mindestwahrscheinlichkeit korrekt ist, die Analyse unabhängig davon abgebrochen wird, ob alle Videobilder analysiert sind oder nicht, so dass die Analyse auch dann abgebrochen wird, wenn noch nicht alle Videobilder analysiert wurden.

Dadurch wird zum Beispiel der technische Vorteil bewirkt, dass die Analyse effizient durchgeführt werden kann. Dadurch wird zum Beispiel der technische Vorteil bewirkt, dass eine Prozessorlast für die Analyse effizient reduziert werden kann.

In einer Ausführungsform ist vorgesehen, dass die jeweiligen Videobilder der Videokameras nacheinander, also nicht parallel, analysiert werden, wobei ein Abbruchkriterium festgelegt ist, wobei bei Vorliegen des Abbruchkriteriums die Analyse der Videobilder abgebrochen wird, auch wenn noch nicht alle Videobilder analysiert wurden.

Beispielsweise ist ein Abbruchkriterium, dass, wenn nach x (einstellbarer Wert) Analysen der jeweiligen Videobilder der ausgewählten Videokameras y (einstellbarer Wert) mal ein Zwischenergebnis ermittelt wird, das mit einer vorbestimmten Mindestwahrscheinlichkeit korrekt ist, die Analyse der jeweiligen Videobilder der restlichen Videokameras abgebrochen wird. Die Analyse wird also vorzeitig abgebrochen, wenn das Abbruchkriterium erfüllt ist.

Dies gilt beispielsweise immer für eine Position (repräsentiert zum Beispiel durch 1 Pixel auf dem jeweiligen Videobild und/oder die kleinste auflösbare physikalische Einheit, zum Beispiel 1 cm mal 1 cm) und/oder für einen zusammenhängenden Bereich (zum Beispiel 5 Pixel mal 5 Pixel und/oder 5 cm mal 5 cm). Wenn zum Beispiel in einem Bereich (zum Beispiel x Pixel mal x Pixel oder in cm, also x cm mal x cm) der jeweiligen Videobilder die Bildbereiche "gleich" oder "nicht gleich" (-> Abbruchkriterium) sind, dann wird insbesondere abgebrochen. Dieses Abbruchkriterium kann man auf unterschiedliche Bereiche anwenden. Je kleiner der Bereich ist, desto genauer, aber auch desto rechenintensiver. Das heißt, dass ein bestimmter Bereich (x Pixel mal x Pixel oder x cm mal x cm) in den Videobildern (bei Angabe des Bereichs in Pixeln) oder in der realen Welt (bei Angabe in cm) festgelegt wird, wobei, wenn die jeweiligen Analysen dieser Bereiche in den Videobildern ein gleichwertiges Ergebnis ("gleich" oder "nicht gleich", also unterschiedlich) ergeben, die Analyse insbesondere abgebrochen und nicht fortgesetzt wird.

Die Anzahl und die Auswahl der einzelnen Sichten (entsprechend der Videokameras) ist dabei beispielsweise für jede Position respektive Bereich unterschiedlich.

Nach einer Ausführungsform ist vorgesehen, dass erstmalig ermittelt wird, welche Videokamera welchen Bereich des Parkplatzes aufnehmen kann, wobei ein Ergebnis des erstmaligen Ermittelns mittels eines Wiederholens des Ermittelns, welche der Videokamera welchen Bereich des Parkplatzes aufnehmen kann, überprüft wird.

Dadurch wird zum Beispiel der technische Vorteil bewirkt, dass der Überlappungsbereich effizient erfasst werden kann. Dadurch wird zum Beispiel der technische Vorteil bewirkt, dass Veränderungen der Videokamerapositionen effizient erkannt und dann auch berücksichtigt werden können. Dadurch wird zum Beispiel der technische Vorteil bewirkt, dass auf Fertigungstoleranzen der Videokameras effizient regiert werden kann, die beispielsweise zu einer Veränderung einer Lage des Sichtfelds führen.

In einer Ausführungsform ist vorgesehen, dass das Ergebnis des erstmaligen Ermittelns vor jeder Analyse von aufgenommenen Videobildern für zumindest diejenigen Videokameras überprüft wird, deren Videobilder analysiert werden sollen.

Dadurch wird zum Beispiel der technische Vorteil bewirkt, dass effizient verhindert werden kann, dass Veränderungen der Videokamerapositionen die Analyse verfälschen respektive erschweren können.

Nach einer Ausführungsform ist vorgesehen, dass der Überlappungsbereich relativ zu mindestens einer Videokamera unterschiedlich beleuchtet wird verglichen mit den anderen Videokameras.

Dadurch wird zum Beispiel der technische Vorteil bewirkt, dass ein Objekt effizient detektiert werden kann. Denn sofern eine Seite des Objekts bevorzugt oder anders beleuchtet wird als andere Seiten des Objekts, so lassen sich in effizienter Weise Unterschiede in den aufgenommenen Videobildern besonders leicht und effizient erkennen.

Dass der Überlappungsbereich relativ zu zumindest einer Videokamera unterschiedlich beleuchtet wird verglichen mit den anderen Videokameras, bedeutet zum Beispiel, dass eine Lichtquelle innerhalb des Parkplatzes angeordnet ist, die den Überlappungsbereich aus der Richtung der zumindest einen Videokamera beleuchtet. Aus den Richtungen der anderen Videokameras ist zum Beispiel keine Beleuchtung, also keine weiteren Lichtquellen, vorgesehen oder es sind unterschiedliche Beleuchtungen vorgesehen, beispielsweise Lichtquellen, die mit unterschiedlichen Lichtstärken betrieben werden.

Gemäß einer Ausführungsform ist vorgesehen, dass der Überlappungsbereich einen Fahrbereich für Kraftfahrzeuge umfasst.

Dadurch wird zum Beispiel der technische Vorteil bewirkt, dass der Fahrbereich effizient überwacht werden kann.

Nach einer Ausführungsform ist vorgesehen, dass das Vergleichen ein Vergleichen einer jeweiligen Helligkeit der rektifizierten Videobilder umfasst, um Helligkeitsunterschiede als einen Unterschied zu erkennen.

Dadurch wird insbesondere der technische Vorteil bewirkt, dass Unterschiede in den aufgenommenen Überlappungsbereichen effizient erkannt werden können.

Nach einer Ausführungsform ist vorgesehen, dass der Parkplatz eingerichtet oder ausgebildet ist, das Verfahren zum Detektieren eines sich innerhalb eines Parkplatzes befindenden erhabenen Objekts aus- oder durchzuführen.

Nach einer Ausführungsform ist vorgesehen, dass das Verfahren zum Detektieren eines sich innerhalb eines Parkplatzes befindenden erhabenen Objekts mittels des Systems zum Detektieren eines sich innerhalb eines Parkplatzes befindenden erhabenen Objekts ausgeführt oder durchgeführt wird.

Technische Funktionalitäten des Systems ergeben sich analog aus entsprechenden technischen Funktionalitäten des Verfahrens und umgekehrt.

Das heißt also insbesondere, dass sich Systemmerkmale aus entsprechenden Verfahrensmerkmalen und umgekehrt ergeben.

Nach einer Ausführungsform ist vorgesehen, dass mindestens n Videokameras vorgesehen sind, wobei n größer oder gleich 3 ist.

Nach einer Ausführungsform ist eine Beleuchtungseinrichtung vorgesehen. Die Beleuchtungseinrichtung ist ausgebildet, den Überlappungsbereich relativ zu zumindest einer Videokamera unterschiedlich zu beleuchten verglichen mit den anderen Videokameras.

Die Beleuchtungseinrichtung umfasst beispielsweise eine oder mehrere Lichtquellen, die räumlich verteilt innerhalb des Parkplatzes angeordnet sind. Die Lichtquellen sind beispielsweise derart angeordnet, dass der Überlappungsbereich aus unterschiedlichen Richtungen unterschiedlich beleuchtet wird.

In einer Ausführungsform ist vorgesehen, dass der Überlappungsbereich spotartig aus einer Vorzugsrichtung beleuchtet wird, beispielsweise mittels der Beleuchtungseinrichtung.

In einer Ausführungsform ist vorgesehen, dass der Überlappungsbereich aus einer einzigen Richtung beleuchtet wird.

Die Lichtquellen sind beispielsweise an einer Decke respektive an einer Säule respektive an einer Wand, allgemein an einem Infrastrukturelement, des Parkplatzes angeordnet.

Nach einer Ausführungsform ist vorgesehen, dass mindestens n Videokameras verwendet werden, wobei n größer oder gleich 3 ist.

Nach einer Ausführungsform ist vorgesehen, dass ein jeweiliger Überlappungsbereich von genau drei oder von genau vier Videokameras überwacht wird, deren jeweiliger Sichtbereich sich in dem jeweiligen Überlappungsbereich überlappt.

In einer Ausführungsform ist vorgesehen, dass mehrere Videokameras vorgesehen sind respektive werden, deren jeweiliger Sichtbereich sich jeweils in einem Überlappungsbereich überlappen. Das heißt also insbesondere, dass hier mehrere Überlappungsbereiche mittels mehrerer Videokameras erfasst, also insbesondere überwacht, werden.

Die Formulierung "respektive" umfasst insbesondere die Formulierung "und/oder".

Nach einer Ausführungsform ist vorgesehen, dass eine respektive mehrere respektive alle Videokameras in einer Höhe von mindestens 2 m, insbesondere 2,5 m, relativ zu einem Boden des Parkplatzes angeordnet sind.

Dadurch wird zum Beispiel der technische Vorteil bewirkt, dass der Überlappungsbereich effizient aufgenommen werden kann.

Gemäß einer Ausführungsform ist vorgesehen, dass diejenige oder diejenigen Videokameras, mittels welcher oder mittels welchen die videokamerainterne Analyse durchgeführt wird, abhängig von einem oder mehreren Verarbeitungskriterien ausgewählt werden.

Dadurch wird zum Beispiel der technische Vorteil bewirkt, dass die Videokameras effizient ausgewählt werden können.

Nach noch einer Ausführungsform ist vorgesehen, dass das oder die Verarbeitungskriterien aus der folgenden Gruppe von Verarbeitungskriterien ausgewählt werden: jeweilige Rechenkapazität der Videokameras, jeweilige Speicherauslastung der Videokameras, jeweilige Übertragungsbandbreite zu den Videokameras, jeweiliger Stromverbrauch der Videokameras, jeweilige Rechenleistung der Videokameras, jeweilige Rechengeschwindigkeit der Videokameras, jeweiliger aktueller Betriebsmodus der Videokameras.

Dadurch wird zum Beispiel der technische Vorteil bewirkt, dass die Videokameras effizient ausgewählt werden können.

In einer Ausführungsform ist vorgesehen, dass das Verarbeitungskriterium mit einem vorbestimmten Verarbeitungskriteriumschwellwert verglichen wird, wobei die Videokameras oder die Videokameras abhängig von einem Ergebnis des Vergleichs ausgewählt werden.

Beispielsweise werden nur Videokameras ausgewählt, deren jeweilige Rechenkapazität größer oder größer-gleich einem Rechenkapazitätsschwellwert ist.

Beispielsweise werden nur Videokameras ausgewählt, deren jeweilige Speicherauslastung kleiner oder kleiner-gleich einem Speicherauslastungsschwellwert ist.

Beispielsweise werden nur Videokameras ausgewählt, zu denen eine Übertragungsbandbreite größer oder größer-gleich einem Übertragungsbandbreitenschwellwert ist.

Beispielsweise werden nur Videokameras ausgewählt, deren jeweiliger Stromverbrauch kleiner oder kleiner-gleich einem Stromverbrauchsschwellwert ist.

Beispielsweise werden nur Videokameras ausgewählt, deren jeweilige Rechenleistung größer oder größer-gleich einem Rechenleistungsschwellwert ist.

Beispielsweise werden nur Videokameras ausgewählt, deren jeweilige Rechengeschwindigkeit größer oder größer-gleich einem Rechengeschwindigkeitswellwert ist.

Beispielsweise werden nur Videokameras ausgewählt, deren jeweiliger aktueller Betriebsmodus einem aktivierten Betriebsmodus entspricht. Ein aktivierter Betriebsmodus ist kein Standby-Modus.

Die Erfindung wird im Folgenden anhand von bevorzugten Ausführungsbeispielen näher erläutert. Hierbei zeigen
Fig. 1 ein Ablaufdiagramm eines Verfahrens zum Detektieren eines sich innerhalb eines Parkplatzes befindenden erhabenen Objekts,
Fig. 2 ein System zum Detektieren eines sich innerhalb eines Parkplatzes befindenden erhabenen Objekts,
Fig. 3 einen ersten Parkplatz,
Fig. 4 zwei Videokameras, die einen Boden eines Parkplatzes überwachen und
Fig. 5 die zwei Videokameras der Fig. 4 bei der Erfassung eines erhabenen Objekts und
Fig. 6 einen zweiten Parkplatz.

Im Folgenden können für gleiche Bezugszeichen gleiche Merkmale verwendet werden.

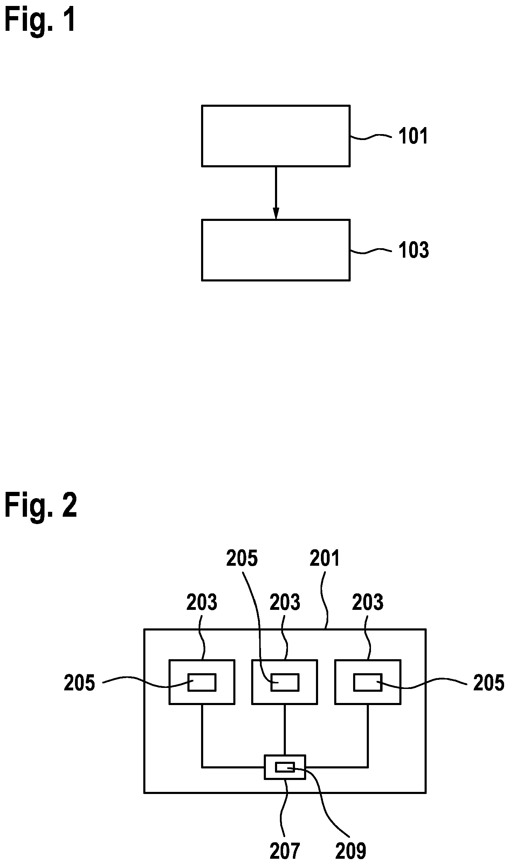

Fig. 1 zeigt ein Ablaufdiagramm eines Verfahrens zum Detektieren eines sich innerhalb eines Parkplatzes befindenden erhabenen Objekts unter Verwendung von mindestens zwei innerhalb des Parkplatzes räumlich verteilt angeordneten Videokameras, deren jeweiliger Sichtbereich sich in einem Überlappungsbereich überlappt.

Das Verfahren umfasst die folgenden Schritte:
- Aufnehmen 101 von jeweiligen Videobildern des Überlappungsbereichs mittels der Videokameras,
- Analysieren 103 der aufgenommenen Videobilder, um in den aufgenommenen Videobildern ein erhabenes Objekt zu detektieren,
- wobei das Analysieren 103 sowohl mittels zumindest einer der Videokameras videokameraintern als auch mittels zumindest einer Recheneinheit, die verschieden von den Videokameras ist, videokameraextern durchgeführt wird.

Ein detektiertes erhabenes Objekt kann beispielsweise wie folgt klassifiziert werden: Kraftfahrzeug, Fußgänger, Radfahrer, Tier, Kinderwagen, Sonstiges.

Fig. 2 zeigt ein System 201 zum Detektieren eines sich innerhalb eines Parkplatzes befindenden erhabenen Objekts. Das System 201 ist ausgebildet, das Verfahren zum Detektieren eines sich innerhalb eines Parkplatzes befindenden erhabenen Objekts auszuführen oder durchzuführen.

Das System 201 umfasst beispielsweise eine Vielzahl von innerhalb des Parkplatzes räumlich verteilt angeordneten Videokameras 203 zum Aufnehmen von Videobildern. Die Videokameras 203 umfassen jeweils einen Prozessor 205 zum videokamerainternen Analysieren der aufgenommenen Videobilder, um in den aufgenommenen Videobildern ein erhabenes Objekt zu detektieren.

Das System 201 umfasst ferner eine Recheneinheit 207, die verschieden von den Videokameras 203 ist. Das heißt also insbesondere, dass die Recheneinheit 207 nicht in einer der Videokameras 203 integriert ist, sondern extern, also separat, von den Videokameras 203 vorgesehen ist.

Die Recheneinheit 207 umfasst einen Prozessor 209 zum videokameraexternen Analysieren der aufgenommenen Videobilder, um in den aufgenommenen Videobildern ein erhabenes Objekt zu detektieren.

Die Videokameras 203 senden ihre aufgenommenen Videobilder beispielsweise über ein Kommunikationsnetzwerk an die Recheneinheit 207.

Das System 201 ist insbesondere ausgebildet, folgende Schritte durchzuführen:
- Auswählen von mindestens zwei Videokameras 203 aus der Vielzahl von Videokameras 203, deren jeweiliger Sichtbereich sich in einem Überlappungsbereich überlappt,
- Aufnehmen eines jeweiligen Videobilds des Überlappungsbereichs mittels der ausgewählten Videokameras 203,
- videokamerainternes Analysieren der aufgenommenen Videobilder mittels eines Prozessors 205 oder mittels mehrerer Prozessoren 205, um in den aufgenommenen Videobildern ein erhabenes Objekt zu detektieren.

In einer Ausführungsform umfasst das System 201 mehrere Recheneinheiten. Ausführungen, die im Zusammenhang mit einer Recheneinheit gemacht sind, gelten analog für mehrere Recheneinheiten und umgekehrt.

Es ist vorgesehen, dass die Analyse der aufgenommenen Videobilder sowohl auf einer oder auf mehreren der Videokameras 203 durchgeführt wird als auch auf der externen Recheneinheit. Eine Analyse mittels der externen Recheneinheit ist explizit vorgesehen.

Die Recheneinheit 207 kann auch als eine Datenverarbeitungseinrichtung bezeichnet werden.

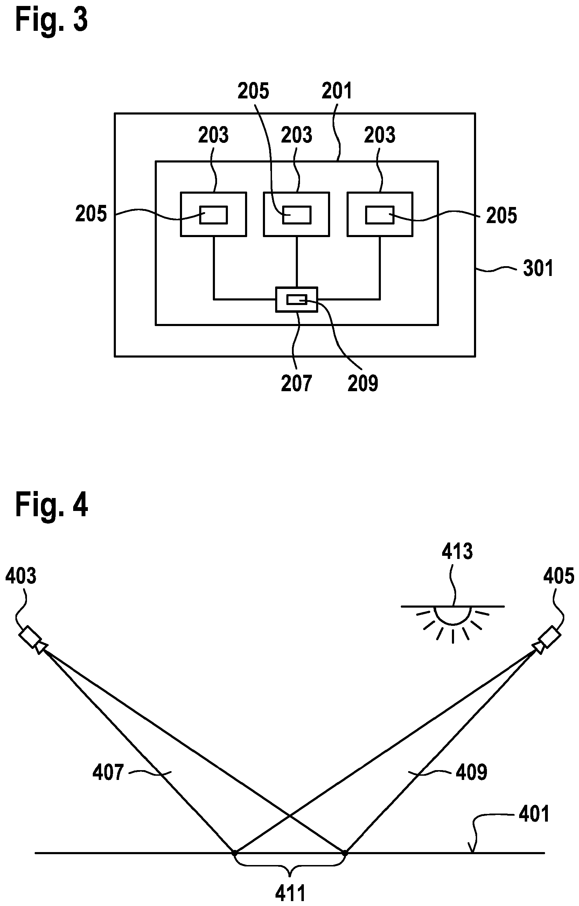

Fig. 3 zeigt einen Parkplatz 301.

Der Parkplatz 301 umfasst das System 201 der Fig. 2.

An dieser Stelle wird angemerkt, dass zwar die einzelnen in den Fig. 2 und 3 gezeichneten Elemente zeichnerisch mit Strichen verbunden sind. Dies soll aber nicht einschränkend dahingehend zu verstehen sein, dass die einzelnen Elemente kabelgebunden miteinander verbunden sind. Die einzelnen Elemente sind nach einer Ausführungsform mittels eines Kommunikationsnetzwerks miteinander verbunden. Das Kommunikationsnetzwerk umfasst beispielsweise ein kabelloses und/oder kabelgebundenes Kommunikationsnetzwerk. Die einzelnen Elemente können also kabellos und/oder kabelgebunden untereinander kommunizieren.

Fig. 4 zeigt eine erste Videokamera 403 und eine zweite Videokamera 405, die einen Boden 401 eines Parkplatzes überwachen. Die beiden Videokameras 403, 405 sind beispielsweise an einer Decke (nicht gezeigt) angeordnet.

Die erste Videokamera 403 weist einen ersten Sichtbereich 407 auf. Die zweite Videokamera 405 weist einen zweiten Sichtbereich 409 auf. Die beiden Videokameras 403, 405 sind derart angeordnet, dass sich die beiden Sichtbereiche 407, 409 in einem Überlappungsbereich 411 überlappen. Dieser Überlappungsbereich 411 ist Teil des Bodens 401.

Unmittelbar links neben der zweiten Videokamera 405 ist eine Lichtquelle 413 angeordnet, die den Überlappungsbereich 411 aus Richtung der zweiten Videokamera 405 beleuchtet.

Auf dem Boden 401 befindet sich kein erhabenes Objekt. Das heißt also, dass beide Videokameras 403, 405 den gleichen Überlappungsbereich 411 sehen oder erfassen. Das heißt also, dass die beiden Videokameras 403, 405 die gleiche Bildinformation des Überlappungsbereichs 411 erkennen oder sehen.

Die beiden Videokameras 403, 405 nehmen jeweils Videobilder des Überlappungsbereichs 411 auf, wobei die Videobilder rektifiziert werden. Wenn sich kein erhabenes Objekt zwischen dem Überlappungsbereich 411 und der Videokamera 403 respektive 405 befindet, so unterscheiden sich die jeweils rektifizierten Videobilder nicht voneinander, zumindest nicht innerhalb einer vorgegebenen Toleranz (der vorbestimmte Toleranzwert). In diesem Fall wird also kein Unterschied erkannt werden, sodass entsprechend auch kein erhabenes Objekt detektiert wird.

Der Überlappungsbereich 411 befindet sich zum Beispiel auf einem Fahrbereich des Parkplatzes. Das heißt also beispielsweise, dass auf dem Überlappungsbereich 411 Kraftfahrzeuge fahren können.

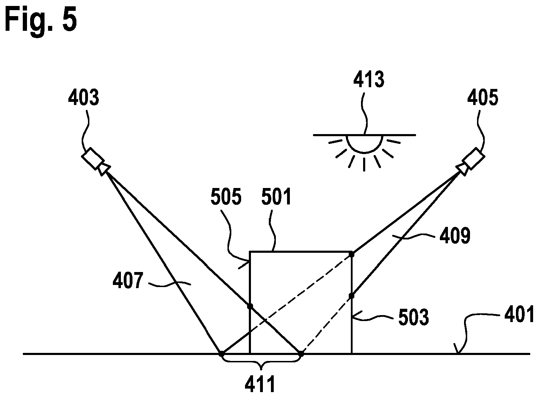

Fig. 5 zeigt die beiden Videokameras 403, 405 bei der Erfassung eines erhabenen Objekts 501. Das erhabene Objekt 501 weist gegenüberliegende Seiten 503, 505 auf: Die Seite 503 wird nachfolgend als die (bezogen auf die Papierebene) rechte Seite bezeichnet. Die Seite 505 wird nachfolgend als die (bezogen auf die Papierebene) linke Seite bezeichnet.

In der Regel sehen erhabene Objekte von unterschiedlichen Seiten unterschiedlich aus. Das heißt also, dass das erhabene Objekt 501 von der rechten Seite 503 anders aussieht als von der linken Seite 505.

Das erhabene Objekt 501 befindet sich auf dem Boden 401. Das erhabene Objekt 501 befindet sich zwischen dem Überlappungsbereich 411 und den beiden Videokameras 403, 405.

Die erste Videokamera 403 erfasst die linke Seite 505 des erhabenen Objekts 501. Die zweite Videokamera 405 erfasst die rechte Seite 503 des erhabenen Objekts 501.

In diesem Fall unterscheiden sich somit die jeweils rektifizierten Videobilder, sodass entsprechend ein Unterschied erkannt wird. Entsprechend wird dann das erhabene Objekt 501 detektiert. Hier sind die Unterschiede größer als der vorbestimmte Toleranzwert.

Durch das Vorsehen der Lichtquelle 413 wird insbesondere bewirkt, dass die rechte Seite 503 stärker beleuchtet wird als die linke Seite 505. Dadurch wird zum Beispiel der technische Vorteil bewirkt, dass sich die aufgenommenen und somit auch die rektifizierten Videobilder in ihrer Helligkeit unterscheiden. Helligkeitsunterschiede können effizient detektiert werden, sodass der Unterschied effizient erkannt werden kann, sodass hierüber in vorteilhafter Weise das erhabene Objekt 501 effizient detektiert werden kann.

Das erhabene Objekt 501 ist zum Beispiel ein Kraftfahrzeug, welches auf dem Boden 401 des Parkplatzes fährt. Die Seiten 503, 505 sind zum Beispiel Vorder- und Rückseiten des Kraftfahrzeugs oder die rechte und linke Seite.

Wenn sich ein nicht-erhabenes, also zweidimensionales oder flaches, Objekt auf dem Boden 401 befindet, so unterscheiden sich die entsprechend rektifizierten Videobilder in der Regel innerhalb einer vorgegebenen Toleranz nicht voneinander. Ein solch zweidimensionales Objekt ist zum Beispiel ein Blatt, Papier oder Laub. Dass in einem solchen Fall sich zwar ein Objekt, wenn auch kein erhabenes Objekt, auf dem Boden 401 befindet, welches gegebenenfalls aufgrund des mangelnden Unterschieds (Unterschiede sind kleiner oder kleiner-gleich als der vorgegebene Toleranzwert.) in den rektifizierten Videobildern nicht detektiert wird, ist hier insofern aus Sicherheitsgründen nicht relevant, da solche nicht erhabenen Objekte in der Regel problemlos durch Kraftfahrzeuge überfahren werden dürfen respektive können. Kraftfahrzeuge können Laub oder Papier überfahren, ohne dass es zu einer gefährlichen Situation oder Kollision kommt im Gegensatz zu einem erhabenen Objekt, welches beispielsweise ein Fußgänger oder ein Radfahrer oder ein Tier oder ein Kraftfahrzeug sein kann. Mit solchen Objekten sollte ein Kraftfahrzeug nicht kollidieren.

Mittels der Videokameras 403, 405 werden Videobilder aufgenommenen, die gemäß den vorstehenden Ausführungen analysiert werden, um ein erhabenes Objekt in den Videobildern zu detektieren.

Das erfindungsgemäße Konzept basiert nun darauf, dass die Analyse der Videobilder sowohl durch die Videokameras oder durch eine der Videokameras selbst durchgeführt wird als auch durch eine externe Recheneinheit. Die Videokameras senden also ihrer aufgenommenen Videobilder zu derjenigen Videokamera oder zu denjenigen Videokameras, die die Analyse durchführen soll respektive sollen, und zu der Recheneinheit. Das Senden umfasst beispielsweise ein Senden der Videobilder über ein Kommunikationsnetzwerk, welches beispielsweise ein drahtloses und/oder ein drahtgebundenes Kommunikationsnetzwerk umfasst.

Je mehr Videokameras die Videobilder unabhängig voneinander analysieren, desto höher ist die Wahrscheinlichkeit eines korrekten respektive sicheren Ergebnisses - dies allerdings auf Kosten einer Berechnungsintensität, beispielsweise einer Prozessorlast oder einer Dauer der Berechnungen.

Die Information, dass ein Objekt detektiert wurde, wird beispielsweise an ein Parkplatzverwaltungssystem, das den Parkplatzverwaltungsserver umfasst, gemeldet oder gesendet. Das Parkplatzverwaltungssystem verwendet beispielsweise diese Information für die Planung oder Verwaltung eines Betriebs des Parkplatzes. Das Parkplatzverwaltungssystem betreibt also beispielsweise den Parkplatz basierend auf der Information.

Diese Information wird beispielsweise bei einer Fernsteuerung eines Kraftfahrzeugs verwendet, welches sich innerhalb des Parkplatzes befindet. Das heißt also beispielsweise, dass das Parkplatzverwaltungssystem basierend auf dem oder den detektierten Objekten ein Kraftfahrzeug innerhalb des Parkplatzes fernsteuert.

Diese Information wird beispielsweise an innerhalb des Parkplatzes autonom fahrende Kraftfahrzeuge über ein drahtloses Kommunikationsnetzwerk übermittelt.

Die Erfindung basiert also insbesondere auf dem Gedanken, mehrere Videokameras zu verwenden, die innerhalb eines Parkplatzes, der beispielsweise als ein Parkhaus oder als eine Parkgarage ausgebildet sein kann, räumlich verteilt derart angeordnet sind, dass beispielsweise jeder Punkt eines Fahrbereichs von mindestens zwei, beispielsweise mindestens drei, Videokameras gesehen oder erfasst respektive überwacht wird. Das heißt also, dass sich die jeweiligen Sichtbereiche jeweils in Überlappungsbereiche überlappen, wobei die Überlappungsbereiche den Fahrbereich abdecken. Die aufgenommenen Videobilder werden beispielsweise vor dem Vergleich rektifiziert.

Die entsprechenden rektifizierten Videobilder der Videokameras werden miteinander verglichen, beispielsweise mittels eines Bildverarbeitungsalgorithmus. Beispielsweise ist vorgesehen, dass, wenn alle Videokameras im Fahrbereich die gleiche Bildinformation an einer bestimmten Stelle oder an einem bestimmten Punkt sehen, bestimmt wird, dass sich auf dem jeweiligen Sichtstrahl zwischen der bestimmten Stelle und den Videokameras kein Objekt befindet. Insofern wird auch kein Objekt detektiert. Unterscheidet sich allerdings gemäß einer Ausführungsform die Bildinformation einer Videokamera an dieser Stelle von den anderen Videokameras, so ist klar, dass sich auf dem Sichtstrahl dieser einen Videokamera ein erhabenes Objekt befinden muss. Insofern wird ein erhabenes Objekt detektiert.

Die Formulierungen "gleiche Bildinformation" respektive "identische Bildinformation" im Sinne dieser Beschreibung umfassen insbesondere auch den Fall, dass sich die Bildinformationen maximal um einen vorbestimmten Toleranzwert unterscheiden. Erst Unterschiede, die größer als der vorbestimmte Toleranzwert ist, resultieren in einer Detektion eines Objekts. Das heißt also insbesondere, dass geringe Unterschiede in der Helligkeits- und/oder Farbinformation zulässig sind, um die Aussage zu treffen, dass die Bildinformation gleich respektive identisch ist, solange die Unterschiede kleiner als der vorbestimmte Toleranzwert sind.

Das heißt also insbesondere, dass beispielsweise eine Toleranz vorgegeben wird respektive ist, um die sich die rektifizierten Videobilder unterscheiden dürfen, ohne dass ein erhabenes Objekt detektiert wird. Erst wenn die Unterschiede größer als die vorgegebene Toleranz sind, wird ein erhabenes Objekt detektiert.

Das heißt also insbesondere, dass gemäß einer Ausführungsform erst dann ein Objekt detektiert wird, wenn die Unterschiede in den rektifizierten Videobildern größer als eine vorgegebene Toleranz respektive ein vorbestimmter Toleranzwert sind.

Das erfindungsgemäße Konzept ist insbesondere in vorteilhafter Weise modellfrei in Bezug auf die zu erkennenden Objekte. Der Algorithmus verwendet beispielsweise nur ein Modellwissen über den Parkplatz, das heißt, wo im Fahrbereich sich Begrenzungsflächen des Parkplatzes (z.B. Boden, Wände oder Säulen) befinden.

Beispielsweise ist vorgesehen, dass sich ein autonom oder ferngesteuert fahrendes Kraftfahrzeug innerhalb des Parkplatzes auf vorher festgelegten Flächen, dem Fahrbereich, bewegt. Die Videokameras sind beispielsweise derart angeordnet, dass sich ihre Sichtbereiche im Fahrbereich überlappen. Diese Überlappung ist derart gewählt, dass jeder Punkt auf den Begrenzungsflächen (zum Beispiel Boden, Wand) im Fahrbereich von mindestens drei Videokameras gesehen oder überwacht wird. Insbesondere ist die Anordnung derart gewählt, dass jeder Punkt auf der Begrenzungsfläche aus unterschiedlichen Perspektiven betrachtet oder überwacht wird.

Das heißt also insbesondere, dass der Überlappungsbereich mittels der Videokameras aus unterschiedlichen Richtungen erfasst respektive aufgenommen wird.

Von jedem einzelnen Punkt der Begrenzungsfläche lassen sich nun die Sichtstrahlen zu den beispielsweise drei Videokameras verfolgen, die diesen Punkt sehen. Sofern mehr Videokameras zur Verfügung stehen sollten, so ist beispielsweise vorgesehen, dass aus den mehreren Kameras drei Videokameras mit möglichst unterschiedlichen Perspektiven ausgewählt werden.

Befindet sich kein erhabenes Objekt auf den Sichtstrahlen der Videokameras zu diesem Punkt, so sehen alle Videokameras die gleiche Bildinformation respektive Bildinformationen, die sich maximal um einen vorbestimmten Toleranzwert unterscheiden, der Begrenzungsfläche (vgl. Fig. 4).

Ändert sich beispielsweise eine Helligkeit oder eine Farbe der Oberfläche des Bodens, beispielsweise wenn der Boden durch Nässeeintrag feucht ist, so stört dies eine Detektion der Begrenzungsfläche nicht, insofern alle Videokameras die gleiche geänderte Helligkeit oder Farbe sehen. Liegt beispielsweise ein zweidimensionales Objekt, beispielsweise ein Blatt, Papier oder Laub, auf dem Boden, so wird dieses nicht erhabene gemäß dem erfindungsgemäßen Konzept in der Regel nicht detektiert, da alle Videokameras die gleiche Bildinformation respektive Bildinformationen, die sich maximal um einen vorbestimmten Toleranzwert unterscheiden, sehen. Dies ist insofern aus Sicherheitsgründen nicht kritisch, da solche zweidimensionalen Objekte von Kraftfahrzeugen problemlos überfahren werden dürfen.

Sofern sich ein erhabenes Objekt im Fahrbereich (vgl. beispielsweise Fig. 5) befindet, treffen die Sichtstrahlen der Videokameras nicht mehr wie erwartet auf die Begrenzungsfläche (Überlappungsbereich), sondern sehen unterschiedliche Ansichten des erhabenen Objekts und nehmen somit unterschiedliche Videobilder auf.

Ein erhabenes Objekt ist beispielsweise eine Person oder ein Kraftfahrzeug.

So sieht zum Beispiel eine Videokamera die Vorderseite des Objekts, während die andere Videokamera die Rückseite des Objekts sieht. In der Regel unterscheiden sich die beiden Seiten signifikant und das erhabene Objekt kann somit detektiert werden, insofern sich die aufgenommenen Videobilder unterscheiden. Dieser Effekt lässt sich beispielsweise durch eine einseitig hellere Beleuchtung der Szene, also des Überlappungsbereichs, verstärken, sodass ein Übersehen von erhabenen Objekten effizient ausgeschlossen werden kann.

Durch eine unterschiedliche Beleuchtung der verschiedenen Seiten eines Objekts erscheint dieses Objekt auf der stärker beleuchteten Seite heller als auf der schwach beleuchteten Seite, sodass die Videokameras unterschiedliche Bildinformationen sehen. Dies gilt selbst für einfarbige Objekte.

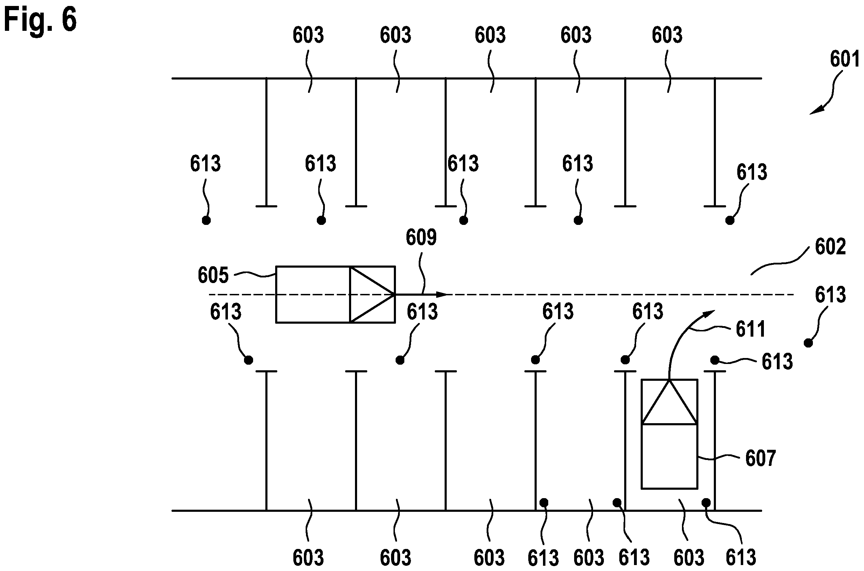

Fig. 6 zeigt einen zweiten Parkplatz 601.

Der Parkplatz 601 umfasst mehrere Stellplätze 603, die quer zu einem Fahrweg 602 angeordnet sind, auf welchem ein erstes Kraftfahrzeug 605 fährt. Ein zweites Kraftfahrzeug 607 parkt auf einem der Stellplätze 603.

Das erste Kraftfahrzeug 605 fährt in Pfeilrichtung 609 von links nach rechts bezogen auf die Papierebene.

Das zweite Kraftfahrzeug 607 will ausparken, was durch einen Pfeil mit dem Bezugszeichen 611 angedeutet ist.

Innerhalb des Parkplatzes sind mehrere Videokameras 613 räumlich verteilt angeordnet. Die Videokameras 613 sind schematisch als ausgefüllter Kreis gezeichnet.

Die Videokameras 613 sind beispielsweise an einem Rand des Fahrwegs 602 jeweils links und rechts versetzt angeordnet. Die Videokameras 613 sind beispielsweise jeweils in Ecken der Stellplätze 603 angeordnet.

Die Videokameras 613 sind beispielsweise an einer Abgabeposition angeordnet, an welcher ein Fahrer eines Kraftfahrzeugs sein Kraftfahrzeug für einen automatischen Parkvorgang (AVP-Vorgang; AVP = automated valet parking) abstellt. Das dort abgestellte Kraftfahrzeug beginnt also das automatische Parken ab der Abgabeposition. Das Kraftfahrzeug fährt also von dort automatisch, insbesondere autonom oder ferngesteuert, zu einem der Stellplätze 603 und parkt dort.

Die Videokameras 613 sind beispielsweise an einer Abholposition angeordnet, an welcher ein Fahrer sein Kraftfahrzeug nach einem Ende eines AVP-Vorgangs abholen kann. Nach Ende einer Parkdauer fährt das auf einem Stellplatz 603 abgestellte Kraftfahrzeug automatisch, insbesondere autonom oder ferngesteuert, zur Abholposition und stellt sich dort ab.

Die Abholposition ist beispielsweise identisch zur Abgabeposition oder beispielsweise verschieden von der Abgabeposition.

Mittels der Videokameras 613 ist somit eine effiziente Überwachung eines Verkehrs, insbesondere eines Verkehrs von automatisch fahrenden Kraftfahrzeugen, also insbesondere von führerlos fahrenden Kraftfahrzeugen, ermöglicht.

Das Konzept sieht eine Detektion der Kraftfahrzeuge vor und basierend darauf beispielsweise eine Steuerung der Kraftfahrzeuge. Beispielsweise wird das erste Kraftfahrzeug 605 detektiert. Insbesondere wird das zweite Kraftfahrzeug 607 detektiert. Insbesondere wird erkannt, dass das zweite Kraftfahrzeug 607 ausparken will. Insbesondere wird erkannt, dass das erste Kraftfahrzeug 605 von links nach rechts fährt. Insbesondere wird eine mögliche Kollision erkannt. Insbesondere wird entsprechend das zweite Kraftfahrzeug 607 ferngesteuert angehalten, bis das erste Kraftfahrzeug 605 an dem zweiten Kraftfahrzeug 607 vorbeigefahren ist.

Diese Schritte des Erkennens basieren insbesondere auf der Analyse der Videobilder von entsprechend ausgewählten Videokameras. Der Übersicht halber ist in Fig. 6 keine Recheneinheit für die videoexterne Analyse eingezeichnet.

Das erfindungsgemäße Konzept ermöglicht es in vorteilhafter Weise, dass erhabene Objekte effizient detektiert oder erkannt werden können. Das erfindungsgemäße Konzept ist insbesondere sehr robust gegenüber Helligkeitsänderungen oder punktuellen Änderungen der Helligkeit, beispielsweise durch Sonneneinstrahlung.

Die Information, dass ein erhabenes Objekt detektiert wird, kann beispielsweise an ein übergeordnetes Regelsystem übergeben werden. Dieses Regelsystem kann beispielsweise ein ferngesteuertes Kraftfahrzeug stoppen oder ein Stoppsignal an ein autonom fahrendes Kraftfahrzeug senden, sodass diese Kraftfahrzeuge vor dem erhabenen Objekt noch rechtzeitig anhalten können. Das Regelsystem ist beispielsweise von dem Parkplatzverwaltungssystem umfasst.

Somit kann das erfindungsgemäße Konzept in vorteilhafter Weise auch im AVP-Bereich eingesetzt werden. "AVP" steht für "Automated Valet Parking" und kann mit "automatischer Parkvorgang" übersetzt werden. Im Rahmen eines solchen AVP-Vorgangs ist insbesondere vorgesehen, dass Kraftfahrzeuge automatisch innerhalb eines Parkplatzes geparkt werden und nach Ende einer Parkdauer automatisch von ihrer Parkposition zu einer Abholposition geführt werden, an welcher das Kraftfahrzeug von seinem Besitzer abgeholt werden kann.

## Patentansprüche

1. Verfahren zum Detektieren eines sich innerhalb eines Parkplatzes (301) befindenden erhabenen Objekts (501) unter Verwendung von mindestens zwei innerhalb des Parkplatzes (301) räumlich verteilt angeordneten Videokameras (203), deren jeweiliger Sichtbereich (407, 409) sich in einem Überlappungsbereich (411) überlappt, umfassend die folgenden Schritte:
Aufnehmen (101) von jeweiligen Videobildern des Überlappungsbereichs (411) mittels der Videokameras (203),
Analysieren (103) der aufgenommenen Videobilder, um in den aufgenommenen Videobildern ein erhabenes Objekt (501) zu detektieren,
wobei das Analysieren sowohl mittels zumindest einer der Videokameras (203) videokameraintern als auch mittels zumindest einer Recheneinheit (207), die verschieden von den Videokameras (203) ist, videokameraextern durchgeführt wird,
wobei die Videokameras respektive die Recheneinheit untereinander kommunizieren, um die jeweils aufgenommenen Videobilder zu derjenigen oder denjenigen Videokameras respektive zur Recheneinheit zu senden, mittels welcher oder mittels welchen die videokamerainterne respektive videokameraexterne Analyse durchgeführt wird.

2. Verfahren nach Anspruch 1, wobei die zumindest eine der Videokameras (203) und die Recheneinheit (207) unabhängig voneinander die aufgenommenen Videobilder analysieren.

3. Verfahren nach Anspruch 1 oder 2, wobei bei mehr als zwei verwendeten Videokameras (203) die Recheneinheit (207) jeweilige Videobilder von mehr Videokameras (203) analysiert als die zumindest eine der Videokameras (203).

4. Verfahren nach einem der vorherigen Ansprüche, wobei ein Ergebnis der Analyse der zumindest einen der Videokameras (203) mit einem Ergebnis der Analyse der Recheneinheit (207) mittels der Recheneinheit (207) überprüft wird.

5. Verfahren nach Anspruch 4, wobei, wenn mittels der Recheneinheit (207) basierend auf der Überprüfung ein Fehler in dem Ergebnis der Analyse der zumindest einen der Videokameras (203) festgestellt wird, die zumindest eine der Videokameras (203) abgeschaltet wird oder die Videobilder der zumindest einen der Videokameras (203) für eine Analyse für eine Detektion eines erhabenen Objekts (501) ignoriert werden respektive die zumindest eine der Videokameras (203) nicht mehr für eine Durchführung einer Analyse für eine Detektion eines erhabenen Objekts (501) verwendet wird.

6. Verfahren nach Anspruch 5, wobei mittels der Recheneinheit (207) eine andere Videokamera (203) bestimmt wird, die anstelle der zumindest einen der Videokameras (203) verwendet wird.

7. Verfahren nach einem der vorherigen Ansprüche, wobei zum Detektieren eines erhabenen Objekts in den aufgenommenen Videobildern gemäß der Analyse folgende Schritte vorgesehen sind:
Rektifizieren der aufgenommenen Videobilder,
miteinander Vergleichen der jeweiligen rektifizierten Videobilder, um einen Unterschied in den aufgenommenen Überlappungsbereichen (411) zu erkennen,
Detektieren eines erhabenen Objekts (501) basierend auf dem Vergleich.

8. System (201) zum Detektieren eines sich innerhalb eines Parkplatzes (301) befindenden erhabenen Objekts (501), wobei das System (201) ausgebildet ist, das Verfahren nach einem der vorherigen Ansprüche durchzuführen, wobei das System mindestens zwei Videokameras und eine Recheneinheit umfasst.

9. Parkplatz (301), umfassend das System (201) nach Anspruch 8.

10. Computerprogramm, umfassend Programmcode zur Durchführung des Verfahrens nach einem der Ansprüche 1 bis 7, wenn das Computerprogramm auf einem System ausgeführt wird, wobei das System mindestens zwei Videokameras und eine Recheneinheit umfasst.

## Claims

1. Method for detecting a raised object (501) located within a car park (301) by using at least two video cameras (203) that are arranged in a spatially distributed manner within the car park (301) and whose respective fields of view (407, 409) overlap in an overlap region (411), comprising the following steps:
recording (101) respective video images of the overlap region (411) by means of the video cameras (203),
analysing (103) the recorded video images to detect a raised object (501) in the recorded video images,
wherein analysing is carried out both by means of at least one of the video cameras (203) internally in said video camera(s) and also externally of the video camera(s) by means of at least one computational unit (207) which is different from the video cameras (203), wherein the video cameras and the computational unit, respectively, communicate with one another in order to transmit the respectively recorded video images to that or those video camera(s) and, respectively, to the computational unit, by means of which video camera(s) and, respectively, computational unit the analysis internal to the video camera(s) and, respectively, the analysis external to the video camera(s) are carried out.

2. Method according to Claim 1, wherein the at least one of the video cameras (203) and the computational unit (207) independently of one another analyse the recorded video images.

3. Method according to Claim 1 or 2, wherein, if more than two video cameras (203) are used, the computational unit (207) analyses respective video images from more video cameras (203) than the at least one of the video cameras (203).

4. Method according to any of the preceding claims, wherein a result of the analysis of the at least one of the video cameras (203) is checked, by means of the computational unit (207), against a result of the analysis of the computational unit (207).

5. Method according to Claim 4, wherein, if an error in the result of the analysis of the at least one of the video cameras (203) is determined on the basis of the check by means of the computational unit (207), the at least one of the video cameras (203) is switched off or the video images of the at least one of the video cameras (203) are ignored in an analysis for detecting a raised object (501) and, respectively, the at least one of the video cameras (203) is no longer used for carrying out an analysis for detecting a raised object (501).

6. Method according to Claim 5, wherein another video camera (203) used in place of the at least one of the video cameras (203) is determined by means of the computational unit (207).

7. Method according to any of the preceding claims, wherein the following steps are provided for detecting a raised object in the recorded video images according to the analysis:
rectifying the recorded video images,
comparing the respective rectified video images to one another to discern a difference in the recorded overlap regions (411),
detecting a raised object (501) on the basis of the comparison.

8. System (201) for detecting a raised object (501) located within a car park (301), wherein the system (201) is configured to carry out the method according to any of the preceding claims, wherein the system comprises at least two video cameras and a computational unit.

9. Car park (301) comprising the system (201) according to Claim 8.

10. Computer program comprising program code for carrying out the method according to any of Claims 1 to 7 when the computer program is executed on a system, wherein the system comprises at least two video cameras and a computational unit.

## Revendications

1. Procédé permettant de détecter un objet saillant (501) se trouvant à l'intérieur d'un parc de stationnement (301), en utilisant au moins deux caméras vidéo (203) réparties dans l'espace à l'intérieur du parc de stationnement (301) et dont les champs de vision (407, 409) respectifs se chevauchent dans une zone de chevauchement (411), comprenant les étapes suivantes consistant à :
enregistrer (101) des images vidéo respectives de la zone de chevauchement (411) au moyen des caméras vidéo (203),
analyser (103) les images vidéo enregistrées pour détecter un objet saillant (501) sur les images vidéo enregistrées,
dans lequel l'analyse est effectuée à la fois de manière interne aux caméras vidéo au moyen d'au moins l'une des caméras vidéo (203) et de manière externe aux caméras vidéo au moyen d'au moins une unité de calcul (207) qui est différente des caméras vidéo (203),
dans lequel les caméras vidéo ou l'unité de calcul communiquent entre elles pour envoyer les images vidéo respectivement enregistrées à la caméra ou aux caméras vidéo ou à l'unité de calcul au moyen de laquelle ou desquelles l'analyse interne aux caméras vidéo ou externe aux caméras vidéo est effectuée.

2. Procédé selon la revendication 1, dans lequel ladite au moins une des caméras vidéo (203) et l'unité de calcul (207) analysent indépendamment les unes des autres les images vidéo enregistrées.

3. Procédé selon la revendication 1 ou 2, dans lequel, si plus de deux caméras vidéo (203) sont utilisées, l'unité de calcul (207) analyse des images vidéo respectives de plusieurs caméras vidéo (203) comme ladite au moins une des caméras vidéo (203).

4. Procédé selon l'une quelconque des revendications précédentes, dans lequel un résultat de l'analyse de ladite au moins une des caméras vidéo (203) est vérifié à l'aide d'un résultat de l'analyse de l'unité de calcul (207) au moyen de l'unité de calcul (207).

5. Procédé selon la revendication 4, dans lequel, si au moyen de l'unité de calcul (207), sur la base de la vérification, une erreur dans le résultat de l'analyse de ladite au moins une des caméras vidéo (203) est constatée, ladite au moins une des caméras vidéo (203) est débranchée, ou les images vidéo de ladite au moins une des caméras vidéo (203) sont ignorées pour une analyse servant à détecter un objet saillant (501), ou ladite au moins une des caméras vidéo (203) n'est plus utilisée pour une exécution d'une analyse servant à détecter un objet saillant (501).

6. Procédé selon la revendication 5, dans lequel l'unité de calcul (207) permet de déterminer une autre caméra vidéo (203) qui est utilisée au lieu de ladite au moins une des caméras vidéo (203).

7. Procédé selon l'une quelconque des revendications précédentes, dans lequel, pour détecter un objet saillant sur les images vidéo enregistrées, les étapes suivantes sont prévues selon l'analyse, consistant à :
rectifier les images vidéo enregistrées,
comparer les images vidéo rectifiées respectives entre elles afin d'identifier une différence dans les zones de chevauchement (411) enregistrées,
détecter un objet saillant (501) sur la base de la comparaison.

8. Système (201) permettant de détecter un objet saillant (501) se trouvant à l'intérieur d'un parc de stationnement (301), le système (201) étant réalisé pour exécuter le procédé selon l'une quelconque des revendications précédentes, le système comprenant au moins deux caméras vidéo et une unité de calcul.

9. Parc de stationnement (301), comprenant le système (201) selon la revendication 8.

10. Programme informatique, comprenant du code programme pour exécuter le procédé selon l'une quelconque des revendications 1 à 7 lorsque le programme informatique est exécuté sur un système, le système comprenant au moins deux caméras vidéo et une unité de calcul.
